# EUROPEAN PATENT APPLICATION

(11) **EP 4 746 090 A1**
(43) Date of publication of application: **20.05.2026**
(21) Application number: 24889059.2
(22) Date of filing: 04.11.2024
(51) Int. Cl.: H01M 10/04, H01M 50/502, H01M 50/242

(54) **BATTERY CELL STACK ASSEMBLING METHOD AND BATTERY CELL STACK ASSEMBLING DEVICE USED THEREFOR**

(30) Priority: 06.11.2023 KR 20230151482
(71) Applicant: LG Energy Solution, Ltd., Seoul 07335 (KR)
(72) Inventor: LEE, Jong Young, Daejeon 34122 (KR); LEE, Joon Hyuk, Daejeon 34122 (KR); KIM, Byung Yong, Daejeon 34122 (KR)
(74) Representative: Plasseraud IP
(86) International application number: PCT/KR2024/017164
(87) International publication number: WO 2025/100871

(57) **Abstract**

Disclosed are a battery cell stack assembly method including a first step of disposing a plurality of battery cells such that cup portions thereof face each other to prepare a battery cell stack, a second step of disposing the battery cell stack on a support jig, a third step of disposing a pair of grippers at opposite ends of the battery cell stack in a width direction, respectively, a fourth step of fixing the battery cell stack using the pair of grippers and separating the battery cell stack from the support jig, and a fifth step of pressing the battery cell stack using a pressing member and a battery cell stack assembly apparatus used therefor, wherein friction force is removed during a process of aligning the central axis of the battery cell stack, whereby it is possible to easily and accurately align the central axis of the battery cell stack.

## Description

### [Technical Field]

This application claims the benefit of priority to Korean Patent Application No. 2023-0151482 filed on November 6, 2023, the disclosure of which is incorporated herein by reference in its entirety.

The present invention relates to a battery cell stack assembly method and a battery cell stack assembly apparatus used therefor. More particularly, the present invention relates to a battery cell stack assembly method of aligning a battery cell stack received in a battery module such that the battery cell stack is accurately located at the assembly position of a busbar frame assembly when assembling the battery cell stack and the busbar frame assembly and a battery cell stack assembly apparatus used therefor.

### [Background Art]

With the strengthening of carbon emission regulations, the demand for eco-friendly energy is increasing, and the number of apparatuses using lithium secondary batteries as an energy source is increasing.

Thereamong, lithium secondary batteries are increasingly being assembled into battery modules and battery packs even in fields that require high-output and high-capacity energy sources, such as electric vehicles.

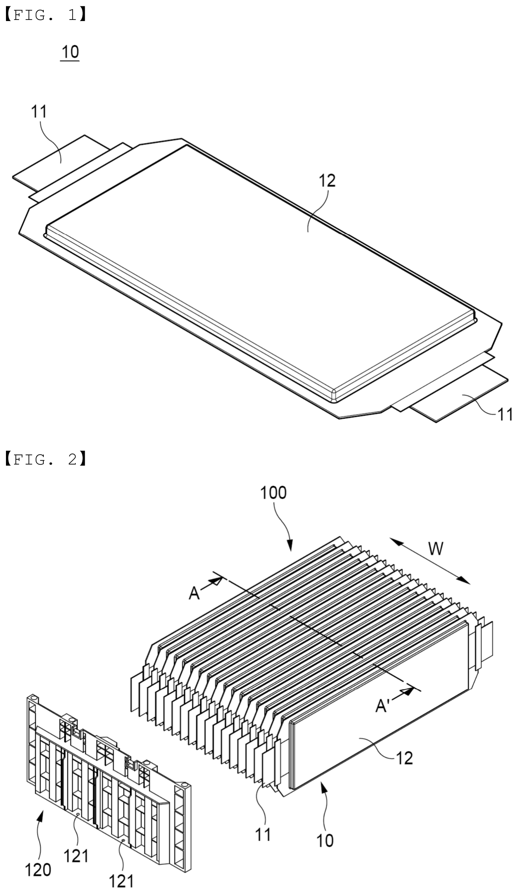

Regarding the manufacture of the battery modules, FIG. 1 is a perspective view of a general pouch-shaped battery cell, and FIG. 2 is a perspective view of a battery cell stack in which pouch-shaped battery cells of FIG. 1 are stacked and a busbar frame assembly coupled thereto.

Referring to FIG. 1 and FIG. 2, a pouch-shaped battery cell 10 may be used as a lithium secondary battery constituting a battery module. The pouch-shaped battery cell 10 is manufactured by using a laminate sheet including a metal layer and a resin layer as a battery case, receiving an electrode assembly in the battery case, and sealing an outer periphery of the battery case by thermal fusion. Electrode leads 11 connected to the electrode assembly protrude outwardly from the outer periphery of the battery case and function as electrode terminals.

As shown in FIG. 2, a plurality of pouch-shaped battery cells 10 is disposed so that the bottoms of cup portions 12 are in tight contact with each other to form a battery cell stack 100, and a busbar frame assembly 120 is coupled to each of opposite ends of the battery cell stack 100 from which electrode leads 11 protrude. However, FIG. 2 shows the busbar frame assembly 120 being coupled only to one side of the battery cell stack 100 for convenience of description.

In order to couple the busbar frame assembly 120 and the battery cell stack 100 to each other, the battery cell stack 100 is pressed on a support jig 200 in a stacking direction S to align the battery cell stack 100 such that the center of the busbar frame assembly 120 in a width direction W and the center of the battery cell stack 100 in the width direction W coincide with each other.

The support jig 200 is provided with a fixing pin configured to guide the position of the busbar frame assembly, the busbar frame assembly 120 is provided with a fixing hole 121, and the busbar frame assembly 120 is disposed on the support jig 200 such that the fixing pin extends through the fixing hole 121.

Since the busbar frame assembly 120 is disposed at a predetermined position on the support jig, as described above, the battery cell stack 100 must be aligned so as to correspond to the coupling position of the busbar frame assembly 120. If the center of the busbar frame assembly 120 in the width direction W and the center of the battery cell stack 100 in the width direction W do not coincide with each other, dimensional misalignment of the battery module may occur, which may also affect product quality.

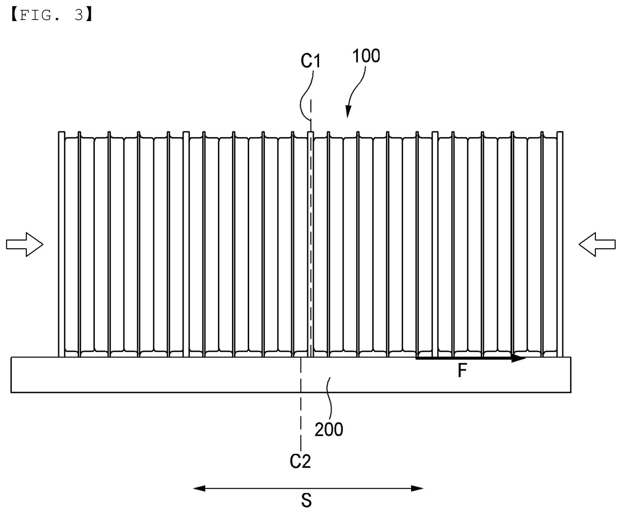

FIG. 3 is a vertical sectional view of a conventional misaligned battery cell stack.

Referring to FIG. 3, the battery cell stack 100 is disposed on the support jig 200 and pressed from opposite sides toward the central axis C1 of the battery cell stack in order to reduce the volume of the battery cell stack 100 and to align the central axis C1 of the battery cell stack with the center of the busbar frame assembly 120.

At this time, friction force F may be generated in a direction indicated by an arrow between an upper surface of the support jig 200 and a lower surface of the battery cell stack 100 due to the weight of the battery cell stack 100. Due to the friction force F, the pressing force from the right side becomes smaller than the pressing force from the left side, whereby the position where the sum of the pressing forces from the opposite sides becomes zero may be biased to the right of the central axis C2 of the support jig.

If the busbar frame assembly 120 is coupled to the fixing pin of the support jig 200 in the state in which the central axis C1 of the battery cell stack is biased to the right, as described above, the central axis C2 of the support jig and the central axis C1 of the battery cell stack are misaligned with each other.

Therefore, there is a need to develop a method of aligning the battery cell stack such that the central axis of the battery cell stack is aligned with the central axis of the support jig before coupling the battery cell stack to the busbar frame assembly and aligning the battery cell stack without being affected by frictional force in order to reliably couple the same to each other.

### [Disclosure]

### [Technical Problem]

The present invention has been made in view of the above problems, and it is an object of the present invention to provide a battery cell stack assembly method of aligning a battery cell stack such that the central axis of a support jig on which the battery cell stack is disposed and the central axis of the battery cell stack coincide with each other and assembling the battery cell stack and a busbar frame assembly in the state in which the coupling position of the busbar frame assembly and the coupling position of the battery cell stack are accurately aligned with each other and a battery cell stack assembly apparatus used therefor.

### [Technical Solution]

A battery cell stack assembly method according to the present invention to accomplish the above object includes a first step of disposing a plurality of battery cells such that cup portions thereof face each other to prepare a battery cell stack, a second step of disposing the battery cell stack on a support jig, a third step of disposing a pair of grippers at opposite ends of the battery cell stack in a width direction, respectively, a fourth step of fixing the battery cell stack using the pair of grippers and separating the battery cell stack from the support jig, and a fifth step of pressing the battery cell stack using a pressing member.

The central axis (C2) of the support jig may be marked on the support jig, and the central axis (C1) of the battery cell stack may be located so as to be aligned with the central axis (C2) of the support jig.

In the fourth step, the pair of grippers may primarily press the battery cell stack in a direction toward the middle of the battery cell stack.

The battery cell stack may be moved upward in the state in which the pair of grippers primarily presses the battery cell stack.

Alternatively, the battery cell stack may be fixed in position and the support jig may be moved downward in the state in which the pair of grippers primarily presses the battery cell stack.

The pressing member may include a first pressing member and a second pressing member located outside the pair of grippers, respectively, and the first pressing member and the second pressing member may have a same magnitude of pressing force.

In the fifth step, the central axis (C1) of the battery cell stack pressed may be aligned with the central axis (C2) of the support jig.

The battery cell stack assembly method may further include a sixth step of placing the battery cell stack pressed in the fifth step on the support jig and coupling electrode leads of the plurality of battery cells to a busbar frame.

The support jig may be provided with a fixing pin inserted into a fixing hole formed in the busbar frame.

A buffer pad may be disposed between the plurality of battery cells or on at least one of the opposite ends of the battery cell stack.

The present invention provides a battery cell stack assembly apparatus used for the battery cell stack assembly method, the battery cell stack assembly apparatus including a support jig configured to allow a battery cell stack including a plurality of battery cells to be disposed thereon, a pair of grippers configured to fix the battery cell stack, a lifting unit configured to separate the battery cell stack from the support jig, and a pressing member configured to press the battery cell stack.

The lifting unit may be connected to the pair of grippers and configured to move the battery cell stack fixed by the pair of grippers.

Alternatively, the lifting unit may be connected to the support jig and configured to move the support jig downward in the state in which the battery cell stack is gripped and fixed in position by the pair of grippers.

In addition, the present invention may provide various combinations of the above solving means.

### [Advantageous Effects]

As is apparent from the above description, in a battery cell stack assembly method according to the present invention, an alignment process of aligning the central axis of a battery cell stack is not affected by frictional force, whereby it is possible to easily align the central axis of the battery cell stack.

Consequently, a busbar frame assembly and the battery cell stack may be assembled in the state in which the coupling position of the busbar frame assembly and the coupling position of the battery cell stack are accurately aligned with each other.

As a result, it is possible to reduce the time required to align the battery cell stack, to simplify the assembly process, and to increase the dimensional uniformity of an assembled battery module.

### [Description of Drawings]

FIG. 1 is a perspective view of a general pouch-shaped battery cell.
FIG. 2 is a perspective view of a battery cell stack in which pouch-shaped battery cells of FIG. 1 are stacked and a busbar frame assembly coupled thereto.
FIG. 3 is a vertical sectional view of a conventional misaligned battery cell stack.
FIG. 4 is a series of views showing a battery cell stack assembly method according to the present invention.
FIG. 5 is a perspective view of a support jig, a battery cell stack, and a busbar frame assembly according to the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

The same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

A description to embody elements through limitation or addition may be applied to all inventions, unless particularly restricted, and does not limit a specific invention.

In the description of the invention and the claims of the present application, singular forms are intended to include plural forms unless mentioned otherwise.

In the description of the invention and the claims of the present application, "or" includes "and" unless mentioned otherwise. Therefore, "including A or B" means three cases, namely, the case including A, the case including B, and the case including A and B.

Embodiments of the present invention will be described in more detail with reference to the drawings.

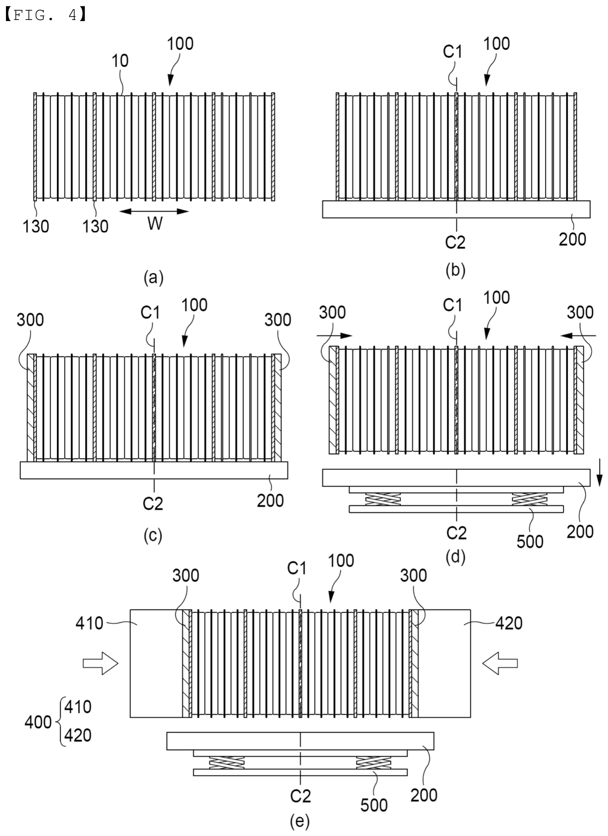

FIG. 4 is a series of views showing a battery cell stack assembly method according to the present invention.

Referring to FIG. 4, a method of assembling a battery cell stack according to the present invention includes a first step (a) of disposing a plurality of battery cells 10 such that cup portions thereof face each other to prepare a battery cell stack 100, a second step (b) of disposing the battery cell stack 100 on a support jig 200, a third step (c) of disposing a pair of grippers 300 at opposite ends of the battery cell stack 100 in a width direction W, respectively, a fourth step (d) of fixing the battery cell stack 100 using the pair of grippers 300 and separating the battery cell stack from the support jig 200, and a fifth step (e) of pressing the battery cell stack 100 using a pressing member 400.

The battery cell stack is configured such that the pouch-shaped battery cells shown in FIG. 1 are disposed in tight contact with each other, and optionally, a buffer pad 130 may be disposed between the plurality of battery cells 10 or on at least one of the opposite ends of the battery cell stack 100. FIG. 4 shows the state in which one buffer pad 130 disposed at each of the opposite ends of the battery cell stack 100 and three buffer pads 130 are disposed between the plurality of battery cells 10 at predetermined intervals.

When the buffer pads 130 are disposed, damage to the pouch-shaped battery cells 10 may be prevented during a process of pressing the battery cell stack 100 using the pressing member 400. In addition, the buffer pads 130 may accommodate the volume expansion of the pouch-shaped battery cells 10 during a charging and discharging process, thereby preventing an increase in the overall size of the battery cell stack 100.

The central axis C2 of the support jig 200, on which the battery cell stack 100 is disposed, may be marked on an upper surface of the support jig, whereby the battery cell stack 100 may be disposed such that the central axis C1 of the battery cell stack is aligned with the central axis C2 of the support jig.

In the third step, the pair of grippers 300 is disposed at the opposite ends of the battery cell stack in the width direction W, respectively, wherein the pair of grippers 300 may primarily press the battery cell stack 100 in a direction toward the middle of the battery cell stack.

The primary pressing means pressing to the extent that the pair of grippers can grip the battery cell stack to move the battery cell stack or pressing to the extent that the pair of grippers can grip the battery cell stack to prevent downward movement of the battery cell stack when the support jig supporting the battery cell stack under the battery cell stack is separated from the battery cell stack and is released from supporting the battery cell stack.

In the state in which the pair of grippers 300 primarily presses the battery cell stack 100, as described above, the battery cell stack may be moved upward to perform the fourth step.

Alternatively, in the state in which the pair of grippers 300 primarily presses the battery cell stack 100, the battery cell stack 100 may be fixed in position and the support jig 200 may be moved downward to perform the fourth step.

At this time, a lifting unit 500 configured to lift the support jig 200 may be disposed under the support jig 200 for downward movement of the support jig 200.

FIG. 4 shows a lifting unit 500 configured to downwardly move the supporting jig 200 while folding and to upwardly move the supporting jig 200 while unfolding, but the lifting unit applicable in the present invention is not limited thereto, and a hydraulic cylinder, a servomotor, or the like may be used.

Conventionally, there is a problem that, in the process of pressing the battery cell stack using the pressing member, the central axis of the battery cell stack and the central axis of the supporting jig are not aligned with each other due to friction force generated at the contact surface between a lower surface of the battery cell stack and the upper surface of the supporting jig.

In the present invention, therefore, the battery cell stack 100 and the support jig 200 are spaced apart from each other in the fourth step in order to prevent the above-mentioned problem. Consequently, the process of pressing the battery cell stack 100 using the pressing member in the fifth step may be performed in an environment in which no friction force between the battery cell stack and the support jig is generated.

Specifically, the pressing member 400 may include a first pressing member 410 and a second pressing member 420 located outside the pair of grippers 300, respectively, wherein the first pressing member 410 and the second pressing member 420 may press the battery cell stack with the same magnitude of pressing force toward the central axis C1 of the battery cell stack.

In the second step, in the state in which the central axis C1 of the battery cell stack and the central axis C2 of the supporting jig are aligned with each other, the first pressing member 410 and the second pressing member 420 press the battery cell stack 100 with the same magnitude of pressing force, and at this time, the friction force is not affected, whereby the shrinkage distances of the opposite ends of the battery cell stack 100 relative to the central axis C1 of the battery cell stack 100 become the same. As a result, after pressing in the fifth step, the central axis C1 of the battery cell stack and the central axis C2 of the support jig are aligned with each other.

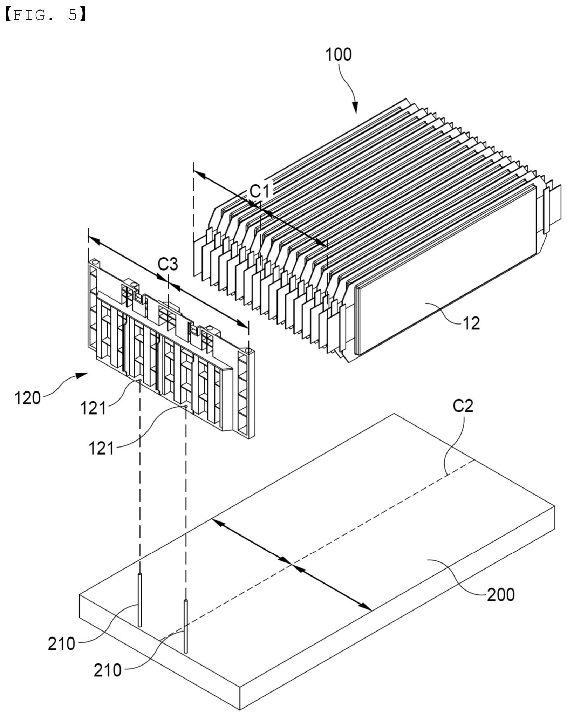

FIG. 5 is a perspective view of the support jig, the battery cell stack, and a busbar frame assembly according to the present invention.

Referring to FIG. 5, the battery cell stack 100 pressed in the fifth step is placed on the support jig 200 such that the central axis C1 of the battery cell stack is aligned with the central axis C2 of the support jig.

The busbar frame assembly 120 is provided with a fixing hole 121 through which the busbar frame assembly 120 is fixed to the support jig 200, and the busbar frame assembly 120 is disposed on the support jig 200 such that a fixing pin 210 located perpendicular to the upper surface of the support jig 200 extends through the fixing hole 121.

The busbar frame assembly 120 is located so as to face electrode leads 11 of the battery cell stack 100, and a sixth step of coupling the electrode leads 11 to a coupling portion of the busbar frame assembly 120 may be further included.

The busbar frame assembly 120 may be provided with slits through which the electrode leads extend, and a busbar plate may be located adjacent to the slits. Ends of the electrode leads may pass through the slits and then be bent, and the bent portions of the electrode leads may be coupled to the busbar plate by welding.

A battery cell stack assembly apparatus according to the present invention will be described with reference to FIG. 4 and FIG. 5. The battery cell stack assembly apparatus includes a support jig 200 configured to allow a battery cell stack 100 including a plurality of battery cells 10 to be disposed thereon, a pair of grippers 300 configured to fix the battery cell stack 100, a lifting unit 500 configured to separate the battery cell stack 100 from the support jig 200, and a pressing member 400 configured to press the battery cell stack.

Unlike what is shown in FIG. 4, the lifting unit may be connected to the pair of grippers 300, and may move the battery cell stack such that the battery cell stack fixed by the pair of grippers is moved away from the support jig.

Alternatively, as shown in FIG. 4, the lifting unit 500 may be connected to the support jig 200, and may move the support jig 200 downward in the state in which the battery cell stack 100 is gripped and fixed in position by the pair of grippers 300 such that the battery cell stack 100 and the support jig 300 are separated from each other.

In the present invention, as described above, the method of pressing the battery cell stack in the state in which the battery cell stack is spaced apart from the support jig is used, and therefore it is possible to remove frictional forces that may occur at the interface between the battery cell stack and the support jig when pressing the battery cell stack. Consequently, it is possible to easily achieve alignment of the battery cell stack and the support jig and to accurately align the coupling positions of the battery cell stack and the busbar frame assembly.

Those skilled in the art to which the present invention pertains will appreciate that various applications and modifications are possible within the scope of the present invention based on the above description.

### (Description of Reference Symbols)

10: Pouch-shaped battery cell
11: Electrode lead
12: Cup portion
100: Battery cell stack
120: Busbar frame assembly
121: Fixing hole
130: Buffer pad
200: Support jig
210: Fixing pin
300: Gripper
400: Pressing member
410: First pressing member
420: Second pressing member
500: Lifting unit
C1: Central axis of battery cell stack
C2: Central axis of support jig
F: Friction force

## Claims

1. A battery cell stack assembly method comprising:
a first step of disposing a plurality of battery cells such that cup portions thereof face each other to prepare a battery cell stack;
a second step of disposing the battery cell stack on a support jig;
a third step of disposing a pair of grippers at opposite ends of the battery cell stack in a width direction, respectively;
a fourth step of fixing the battery cell stack using the pair of grippers and separating the battery cell stack from the support jig; and
a fifth step of pressing the battery cell stack using a pressing member.

2. The battery cell stack assembly method according to claim 1, wherein
a central axis (C2) of the support jig is marked on the support jig, and
a central axis (C1) of the battery cell stack is located so as to be aligned with the central axis (C2) of the support jig.

3. The battery cell stack assembly method according to claim 1, wherein, in the fourth step, the pair of grippers primarily presses the battery cell stack in a direction toward a middle of the battery cell stack.

4. The battery cell stack assembly method according to claim 3, wherein the battery cell stack is moved upward in a state in which the pair of grippers primarily presses the battery cell stack.

5. The battery cell stack assembly method according to claim 3, wherein the battery cell stack is fixed in position and the support jig is moved downward in a state in which the pair of grippers primarily presses the battery cell stack.

6. The battery cell stack assembly method according to claim 1, wherein
the pressing member comprises a first pressing member and a second pressing member located outside the pair of grippers, respectively, and
the first pressing member and the second pressing member have a same magnitude of pressing force.

7. The battery cell stack assembly method according to claim 1, wherein, in the fifth step, a central axis (C1) of the battery cell stack pressed is aligned with a central axis (C2) of the support jig.

8. The battery cell stack assembly method according to claim 1, further comprising a sixth step of placing the battery cell stack pressed in the fifth step on the support jig and coupling electrode leads of the plurality of battery cells to a busbar frame.

9. The battery cell stack assembly method according to claim 8, wherein the support jig is provided with a fixing pin inserted into a fixing hole formed in the busbar frame.

10. The battery cell stack assembly method according to claim 1, wherein a buffer pad is disposed between the plurality of battery cells or on at least one of the opposite ends of the battery cell stack.

11. A battery cell stack assembly apparatus used for the battery cell stack assembly method according to any one of claims 1 to 10, the battery cell stack assembly apparatus comprising:
a support jig configured to allow a battery cell stack comprising a plurality of battery cells to be disposed thereon;
a pair of grippers configured to fix the battery cell stack;
a lifting unit configured to separate the battery cell stack from the support jig; and
a pressing member configured to press the battery cell stack.

12. The battery cell stack assembly apparatus according to claim 11, wherein the lifting unit is connected to the pair of grippers and configured to move the battery cell stack fixed by the pair of grippers.

13. The battery cell stack assembly apparatus according to claim 11, wherein the lifting unit is connected to the support jig and configured to move the support jig downward in a state in which the battery cell stack is gripped and fixed in position by the pair of grippers.
